# EUROPÄISCHE PATENTSCHRIFT

(11) **EP 1 650 242 B1**
(45) Veröffentlichungstag und Bekanntmachung des Hinweises auf die Patenterteilung: **09.06.2010**
(21) Anmeldenummer: 05021976.5
(22) Anmeldetag: 08.10.2005
(51) Int. Cl.: C08G 18/78, C08G 18/76

(54) **Kristallisationsstabile MDI-Allophanate nach einem zweistufigen Verfahren**
Crystallisation stable MDI allophanates obtained by a two step process
Allophanates de MDI obtenus par un procédé en deux étapes résistants à la cristallisation

(30) Priorität: 20.10.2004 DE 102004051026
(43) Veröffentlichungstag der Anmeldung: 26.04.2006
(73) Patentinhaber: Bayer MaterialScience AG, 51368 Leverkusen (DE)
(72) Erfinder: Simon, Joachim, Dr., 40789 Düsseldorf (DE); Ruttmann, Gerhard, 51399 Burscheid (DE); Köhler, Burkhard, Dr., 51373 Leverkusen (DE)

(56) Entgegenhaltungen:
- EP-A- 1 371 637
- US-A- 5 319 054
- US-A- 5 610 260
- US-A- 5 686 042

## Beschreibung

Die Erfindung betrifft neue, nach einem zweistufigen Verfahren hergestellte, MDI-Allophanate, die sich durch einen höheren Oligomerisierungsgrad und durch Kristallisationsstabilität auszeichnen.

Unter MDI werden Mischungen aus dem 2,2'-, 2,4'- und 4,4'-lsomeren des Diisocyanatodiphenylmethans verstanden, wobei das 2,2'-Isomer in Mengen bis 2 Gew.-% enthalten sein kann.

Sowohl das 2,4'- als auch das 4,4'-Isomer des MDI ist bei Raumtemperatur kristallin, was für eine praktische Anwendung problematisch ist, da oftmals flüssige, aromatische Isocyanate auf MDI-Basis benötigt werden.

Möglichkeiten zur Herstellung flüssiger MDT-Derivate sind die partielle Umsetzung von NCOgruppen unter Urethanisierung mit Diolen (US-A 3 644 457), die Carbodiimidiserung (Umsetzung mit Carbodiimidisierwigskatalysatoren z.B. nach US-A 4 154 752) oder die Allophanatisierung (Umsetzung mit Monoalkoholen z.B. nach EP-A 1 371 637).

Eine ausreichende Kristallisationsstabilität bei solchen Produkten wird üblicherweise dann erreicht, wenn der Isocyanatgehalt der modifizierten Produkte zwischen 19 und 28 Gew.-% liegt. Bei solchen NCO-Gehalten ist bei einstufiger Reaktionsführung der Gehalt an höhermolekularen Spezies mit einem Oligomerisierungsgrad von 4 und mehr in der Reaktionsmischung relativ gering. Bei NCO-Gehalten oberhalb von 28 Gew.-% setzt bei solchen Produkten oftmals Verfestigung durch Kristallisation ein, während bei Gehalten unter 19 Gew.-% die Viskosität zu hoch wird.

In der GB 1369334 wird die Derivatisierung von MDI durch Urethanbildung beschrieben, wobei in einer zweistufigen Verfahrensweise vorgegangen wird. Die Umsetzung des Diols erfolgt zunächst nur mit einer Teilmenge des MDIs, um die Bildung vorverlängerter Oligourethane zu begünstigen, die dann mit freiem MDI in der zweiten Stufe abgemischt werden. Solche Produkte enthalten keine Allophanatgruppen.

US 5,319,054 und US 5,686,042 beschäftigen sich mit lagerstabilen Allophanaten auf MDI-Basis. Die Bildung erfolgt in einem zweistufigen Prozess unter Bildung des Diurethans aus einem Äquivalent Diisocyanat und einem Äquivalent Alkohol als Zwischenprodukt.

Auch US 5,610,260 beschreibt die Synthese lagerstabile Allophanate auf MDI-Basis durch einen zweistufigen Prozess, wobei zunächst ein Alkohol mit einem hohen Überschuß an Isocyanat urethanisiert wird und das erhaltene Urethan dann unter Zugabe eines Katalysators allophanatisiert wird.

Die Allophanatisierung, z.B. nach EP-A 1 371 637, führt zu kristallisationsstabiten MDI-Allophanaten, die allerdings nur einen geringen Anteil an höhermolekularen Spezies mit einem Oligomerisierungsgrad von 4 und mehr aufweisen. Diese Allophanate sind daher hinsichtlich ihrer mechanischen Eigenschaften verbesserungswürdig.

Aufgabe der Erfindung was es nun, kristallisationsstabile MDI-Allophanate bereitzustellen, die sich durch einen höheren Anteil an höhermolekularen Spezies auszeichnen und daher verbesserte mechanische Eigenschaften, insbesondere hinsichtlich der Weiterreißfestigkeit von daraus hergestellten Lacken und Beschichtungen zeigen.

Es konnte nun gefunden werden, dass diese Aufgabe durch spezielle MDI-Allophanate gelöst werden kann, bei denen die Abnahme der Häufigkeit der Spezies mit zunehmendem Oligomerisierungsgrad einer Reihe gehorcht, wobei die Spezies n+1 mindestens 50 % der Menge an Spezies n ausmachen. Gegenstand der Erfindung sind daher allophanatgruppenhaltige Polyisocyanate auf Basis von MDI, bei denen wenigstens die Häufigkeit der ersten vier oligomeren Spezies mit zunehmendem Oligomerisationsgrad einer Reihe folgt in der die jeweilige n + 1 Spezies mindestens 50 mol-% der Menge an der vorangegangenen niedermolekularen Spezies n ausmacht und die Häufigkeit der Spezies mit zunehmenden Oligomerisierungsgrad abnimmt. Dabei handelt es sich beim Polymerisationsgrad 1 um das Allophanat, das durch Reaktion von einem Mol MDI mit dem Monourethan aus Monoalkohol und MDI resultiert. Die Spezies n + 1 enthalten mindestens ein weiteres Molekül MDI und kein oder ein weiteres Molekül Monoalkohol.

Bevorzugt folgen mindestens die ersten 6, besonders bevorzugt mindestens die ersten 8 Allophanatspezies dieser Regelmäßigkeit.

Diese erfindungsgemäßen Allophanate auf MDI-Basis haben wegen der ähnlichen Viskosität ferner den Vorteil einer besseren Mischbarkeit mit Polyolen, was die Verarbeitbarkeit verbessert und zu homogeneren Lacken und Beschichtungen führt.

Typischerweise weisen die Spezies der Allophanate Oligomerisationsgrade von 1 bis 100, bevorzugt von 1 bis 20 auf.

Ein weiterer Gegenstand der Erfindung ist ein Verfahren zur Herstellung der erfindungsgemäßen allophanatgruppenhaltigen Polyisocyanaten, bei dem
- A): ein oder mehrere Monohydroxyverbindungen mit
- B): MDI katalysatorfrei in einem NCO/OH-Verhältnis von 2 bis 3 und bei einer Temperatur von 20 bis 120°C solange umgesetzt werden, bis der theoretische Isocyanatgehalt der vollständigen Urethanisierung erreicht ist und anschließend
- C): weitere 3 bis 5 Äquivalente MDI bezogen auf die ursprünglich in A) eingesetzte Menge an Monohydroxyverbindung
zusammen mit
- D): einem Allophanatisierungskatalysator
zugegeben werden und die Reaktion dann bei Temperaturen von 20 bis 120°C so lange weitergeführt wird, der theoretische Isocyanatgehalt der vollständigen Allophanatisierung erreicht ist.

Der theoretische Isocyanatgehalt nach der Urethanisierung wird unter der Annahme berechnet, dass jedes Äquivalent der Monohydroxyverbindung mit einer Isocyanatgruppe unter Urethanbildung reagiert. Der theoretische Isocyanatgehalt nach Allophanatisierung wird unter der Annahme berechnet, dass jede im ersten Schritt gebildete Urethangruppe mit einer Isocyanatgruppe zu einer Allophanatgruppe abreagiert.

Bevorzugt werden die Urethanisierung sowie die Allophanatisierung bei Temperaturen von 60 bis 100°C durchgeführt.

Bevorzugt wird am Anschluss an die Allophanatisierung 25 bis 500 ppm eines Säurechlorids bezogen auf Gesamtmenge des gebildeten Allophanats zur Stabilisierung zugesetzt.

Vorzugsweise wird in der ersten Stufe der Monoalkohol zum vorgelegten MDI zudosiert.

Unter MDI im Sinne der Erfindung wird eine Mischung des Mischungen aus dem 2,2'-, 2,4'- und 4,4'-Isomeren des Diisocyanatodiphenylmethans verstanden, wobei das 2,2'-Isomer in Mengen bis 2 Gew.-% enthalten sein darf. Der Gehalt an 4,4'-Isomeren beträgt vorzugsweise 50 bis 100 Gew.-%, besonders bevorzugt 85 bis 100 Gew.-%, ganz besonders bevorzugt 95 bis 100 Gew.-%. In einer besonders bevorzugten Ausführungsform wird als MDI reines 4,4'-MDI eingesetzt.

Das eingesetzte MDI enthält bevorzugt weniger als 15 Gew.-% polymere Anteile.

Als Monohydroxyverbindungen werden bevorzugt aliphatische, cycloaliphatische oder aromatische Alkohole mit bis zu 36 C-Atomen eingesetzt. Diese können außer der OH-Gruppe gegebenenfalls auch substituiert und/oder heteroatomhaltig sein. Bevorzugte Monoalkohole sind aliphatisch, primär und weisen 4 bis 12 Kohlenstoffatome auf, wie n-Butanol, n-Hexanol, 2-Ethylhexanol, n-Octanol oder die etherbrückenhaltigen Alkohole Methylglykol, Butylglykol, Diethylenglykolmonomethylether, Triethylenglykolmonomethylether und Methoxypropanol.

Als Allophanatisierungkatalysatoren werden bevorzugt Zink-, Kobalt- oder Bleisalze von gesättigten oder ungesättigten C8-C22-Carbonsäuren oder Zink- oder Kobaltchelate mit Acetylaceton eingesetzt.

Als Säurechloride zur Stabilisierung der Allophanate werden z.B. Benzoylchlorid, Phthaloylchlorid, Isophthaloylchlorid oder Terephthaloylchlorid eingesetzt.

Die erfindungsgemäßen MDI-Allophanate dienen zur Herstellung von thermoplastischen, elastomeren oder vernetzten Polyurethanen und zeichnen sich durch eine einfache Herstellbarkeit, gute Kristallisationsstabilität und gute mechanische Eigenschaften der daraus Hergestellten Kunststoffe und Beschichtungen insbesondere hinsichtlich ihrer Weiterreißfestigkeit aus. Die aus den erfindungsgemäßen MDI-Allophanaten resultierenden Polyurethane eigenen sich z.B. für Beschichtungen, thermoplastische Elastomere, Klebstoffe und Schaumstoffe.

### Beispiele:

Soweit nicht anders angegeben sind alle Prozentangaben als Gewichtsprozent zu verstehen.

Die Bestimmung der Oligomerenverteilung erfolgte durch GPC mit THF als Elutionsmittel. Im Rahmen der nachfolgenden Experimente wurde die relative Menge der einzelnen Oligomeren bzw. Allophanatspezies, bestimmt durch die gemessenen Flächenprozente, angegeben, wobei die Menge an MDI-Allophanat mit dem Polymerisationgrad 1 gleich 1 gesetzt wurde und die Menge der jeweils nachfolgenden Spezies n + 1 jeweils auf die Menge an der nächst kleineren Spezies n bezogen wurde. Keine dieser Zahlen soll unter 0,5 liegen, d.h. die Häufigkeit der Spezies mit zunehmendem Oligomerisierungsgrad gehorcht einer geometrischen Folge, wobei die Spezies n + 1 jeweils mindestens 50 % der Menge an Spezies n ausmachen soll.

Die Viskositäten wurden mittels Kegel-Platte-Viskosimetrie bei 23°C bestimmt.

### Beispiel 1:

Es wurden 2,5 Äquivalente 4,4'-Diisocyanatodiphenylmethan bei 80°C vorgelegt und innerhalb von lh mit einem Äquivalent n-Butanol versetzt. Bei dieser Temperatur wurde bis zum Erreichen eines Isocyanatgehalts von 16,3 % weitergerührt und anschließend die Allophanatisierung durch Zugabe von 4,5 Äquivalenten 4,4'-Diisocyanatodiphenylmethan und 100 ppm Zinkoctoat (als 50 %-ige Lösung in Methoxypropylacetat) gestartet. Nachdem der Isocyanatgehalt von 22,0 % erreicht war, wurden noch 100 ppm Benzoylchlorid zugegeben und der Reaktionsansatz abgekühlt.

### Die Verteilung der ersten vier Allophanatspezies folgt der Reihe: 1/0,81 /0,63/0,58

Die Viskosität bei 23°C betrug 657 mPas.

### Beispiel 2:

Es wurden 2,5 Äquivalente 4,4'-Diisocyanatodiphenylmethan bei 80°C vorgelegt und innerhalb von 1 h mit einem Äquivalent n-Butanol versetzt. Bei dieser Temperatur wurde bis zum Erreichen eines Isocyanatgehalts von 16,3 % weitergerührt und anschließend die Allophanatisierung durch Zugabe von 4,5 Äquivalenten einer Mischung aus 85 % 4,4'-Diisocyanatodiphenylmethan und 15 % 2,4'-Diisocyanatodiphenylmethan und 100 ppm Zinkoctoat (als 50 %-ige Lösung in Methoxypropylacetat) gestartet. Nachdem der Isocyanatgehalt von 22,0 % erreicht war, wurden noch 100 ppm Benzoylchlorid zugegeben und der Reaktionsansatz abgekühlt.

Die Verteilung der ersten vier Allophanatspezies folgte der Reihe: 1/0,82 / 0,60 / 0,53

### Vergleichsbeispiel

Bei 80°C wurden 7 Äquivalente 4,4'-Diisocyanatodiphenylmethan vorgelegt und mit einer Lösung aus 100 ppm Zinkoctoat in einem Äquivalent n-Butanol innerhalb von 1 h versetzt. Es wurde bei dieser Temperatur solange weitergerührt, bis der Isocyanatgehalt von 22 % erreicht wurde. Abschließend wurde durch Zugabe von 100 ppm Benzoylchlorid stabilisiert.

Die Verteilung der ersten vier Allophanatspezies folgte der Reihe: 1 / 0,5 / 0,34 / 0,52

Die Viskosität bei 23°C betrug 450 mPas.

### Anwendungstechnische Prüfung:

Zur Untersuchung der Weiterreißfestigkeit gemessen nach DIN S35/5 wurde jeweils das Produkt aus Beispiel 1 und dem Vergleichsbeispiel bei einem NCO/OH-Verhältnis von 1,05 mit einem Polyol mit einem OH-Gehalt von 5,4 % bestehend aus 75 % Ricinusöl und 25 % eines linearen Polyesters mit einer Molmasse Mₙ von 2620 g/mol und Viskosität von 950 mPas aus Adipinsäure und Diethylenglykol versetzt und bei Raumtemperatur katalysatorfrei zur Reaktion gebracht. An den so erhaltenen Lackfilmen wurde nach 3 Tagen gemäß DIN S35/5 die Weiterreißfestigkeit untersucht. Dabei wurde gefunden, dass Polyurethane basierend auf dem Allophanat aus Beispiel 1 mit 39,4 MPa eine deutlich höhere Festigkeit aufweisen als solche basierend auf dem Allophanat des Vergleichsbeispiels mit 33,0 MPa.

Das erfindungsgemäße MDI-Allophanat aus Beispiel 1 ist bei -10°C 23 Tage kristallisationsstabil, während das MDI-Allophanat des Vergleichsbeispiels schon nach 7 Tagen beginnt, auszukristallisieren, was sich durch merkliche Trübung der Probe und anschließende Feststoffausfällung äußert.

## Patentansprüche

1. Allophanatgruppenhaltige Polyisocyanate auf Basis von MDI, bei denen wenigstens die Häufigkeit der ersten vier oligomeren Spezies mit zunehmendem Oligomerisierungsgrad einer Reihe folgt in der die jeweilige n + 1 Spezies mindestens 50 Mol-% der Menge an der vorausgegangenen niedermolekulareren Spezies n ausmacht und die Häufigkeit der Spezies mit zunehmendem Oligomerisierunsgrad abnimmt.

2. Allophanatgruppenhaltige Polyisocyanate gemäß Anspruch 1, **dadurch gekennzeichnet, dass** wenigstens die ersten 6 gebildeten Allophanatspezies der geforderten Regelmäßigkeit entsprechen.

3. Verfahren zur Herstellung von allophanatgruppenhaltigen Polyisocyanaten gemäß Anspruch 1 oder 2, bei dem
A) ein oder mehrere Monohydroxyverbindungen mit
B) MDI
katalysatorfrei in einem NCO/OH-Verhältnis von 2 bis 3 und bei einer Temperatur von 20 bis 120°C solange umgesetzt werden, bis der theoretische Isocyanatgehalt der vollständigen Urethanisierung erreicht ist und anschließend
C) weitere 3 bis 5 Äquivalente MDI bezogen auf die ursprünglich in A) eingesetzte Menge an Monohydroxyverbindung
zusammen mit
D) einem Allophanatisierungskatalysator
zugegeben werden und die Reaktion dann bei Temperaturen von 20 bis 120°C so lange weitergeführt wird, der theoretische Isocyanatgehalt der vollständigen Allophanatisierung erreicht ist.

4. Verfahren zur Herstellung von allophanatgruppenhaltigen Polyisocyanaten gemäß Anspruch 3, **dadurch gekennzeichnet, dass** die Temperatur bei der Urethanisierung und der Allophanatisierung 60 bis 100°C beträgt.

5. Verfahren zur Herstellung von allophanatgruppenhaltigen Polyisocyanaten gemäß Anspruch 3 oder 4, **dadurch gekennzeichnet, dass** nach der Allophanatisierung 25 bis 500 ppm eines Säurechlorids bezogen auf Gesamtmenge des gebildeten Allophanats zur Stabilisierung zugefügt werden.

6. Verfahren zur Herstellung von allophanatgruppenhaltigen Polyisocyanaten gemäß einem der Ansprüche 3 bis 5, **dadurch gekennzeichnet, dass** in A) primäre, aliphatische Monoalkohole mit 4 bis 12 Kohlenstoffatomen eingesetzt werden.

7. Verfahren zur Herstellung von allophanatgruppenhaltigen Polyisocyanaten gemäß einem der Ansprüche 3 bis 5, **dadurch gekennzeichnet, dass** als Allophanatisierungskatalysatoren Zink-, Kobalt- oder Bleisalze gegebenenfalls ungesättigter C8-C22-Carbonsäuren oder Zink- oder Kobaltacetylacetonate eingesetzt werden.

8. Verwendung von allophanatgruppenhaltigen Polyisocyanaten gemäß Anspruch 1 oder 2 bei der Herstellung von thermoplastischen, elastomeren oder vernetzten Polyurethanen.

## Claims

1. Polyisocyanates based on MDI and containing allophanate groups, for which at least the frequency of the first four oligomeric species with increasing degree of oligomerization follows a series in which the respective n + 1 species makes up at least 50 mol% of the amount of the preceding species n of lower molecular mass and the frequency of the species decreases with increasing degree of oligomerization.

2. Polyisocyanates containing allophanate groups according to Claim 1, **characterized in that** at least the first 6 allophanate species formed meet the required rule.

3. Process for preparing polyisocyanates containing allophanate groups according to Claim 1 or 2, in which
A) one or more monohydroxy compounds are reacted with
B) MDI
without catalyst in an NCO/OH ratio of 2 to 3 and at a temperature of 20 to 120°C until the theoretical isocyanate content of complete urethanization has been reached, and subsequently
C) a further 3 to 5 equivalents of MDI, based on the amount of monohydroxy compound originally used in A),
together with
D) an allophanatization catalyst
are added and the reaction is then continued at temperatures of 20 to 120°C until the theoretical isocyanate content of complete allophanatization has been reached.

4. Process for preparing polyisocyanates containing allophanate groups according to Claim 3, **characterized in that** the temperature during the urethanization and the allophanatization is 60 to 100°C.

5. Process for preparing polyisocyanates containing allophanate groups according to Claim 3 or 4, **characterized in that** after the allophanatization 25 to 500 ppm of an acid chloride, based on the total amount of the allophanate formed, are added for the purpose of stabilization.

6. Process for preparing polyisocyanates containing allophanate groups according to one of Claims 3 to 5, **characterized in that** in A) primary, aliphatic monoalcohols having 4 to 12 carbon atoms are used.

7. Process for preparing polyisocyanates containing allophanate groups according to one of Claims 3 to 5, **characterized in that** allophanatization catalysts used are zinc salts, cobalt salts or lead salts of optionally unsaturated C8-C22 carboxylic acids or zinc acetylacetonates or cobalt acetylacetonates.

8. Use of polyisocyanates containing allophanate groups according to Claim 1 or 2 in the production of thermoplastic, elastomeric or crosslinked polyurethanes.

## Revendications

1. Polyisocyanates à base de MDI contenant des groupes allophanate, dans lesquels la fréquence d'au moins les quatre premières espèces oligomères à mesure que le degré d'oligomérisation augmente obéit à une série dans laquelle l'espèce *n*+1 considérée représente au moins 50% en moles de la quantité de l'espèce *n* de masse moléculaire inférieure précédente et la fréquence des espèces diminue à mesure que le degré d'oligomérisation augmente.

2. Polyisocyanates contenant des groupes allophanate selon la revendication 1, **caractérisés en ce qu'**au moins les 6 premières espèces d'allophanates formées obéissent à la régularité exigée.

3. Procédé de fabrication de polyisocyanates contenant des groupes allophanate selon la revendication 1 ou la revendication 2, dans lequel
A) un ou plusieurs composés monohydroxy
sont mis à réagir avec du
B) MDI
sans catalyseur à un rapport NCO/OH de 2 à 3 et à une température de 20 à 120°C jusqu'à atteindre la teneur en isocyanate théorique de l'uréthanisation complète et ensuite
C) 3 à 5 autres équivalents de MDI, ramenés à la quantité de composé monohydroxy initialement utilisée en A),
sont ajoutés ensemble avec
D) un catalyseur d'allophanatisation
et la réaction est ensuite poursuivie à des températures de 20 à 120°C jusqu'à atteindre la teneur en isocyanate théorique de l'allophanatisation complète.

4. Procédé de fabrication de polyisocyanates contenant des groupes allophanate selon la revendication 3, **caractérisé en ce que** la température lors de l'uréthanisation et de l'allophanatisation va de 60 à 100°C.

5. Procédé de fabrication de polyisocyanates contenant des groupes allophanate selon la revendication 3 ou la revendication 4, **caractérisé en ce que**, après l'allophanatisation, 25 à 500 ppm d'un chlorure d'acide, ramenés à la quantité totale de l'allophanate formé, sont ajoutés afin de le stabiliser.

6. Procédé de fabrication de polyisocyanates contenant des groupes allophanate selon l'une des revendications 3 à 5, **caractérisé en ce que**, à l'étape A), des monoalcools aliphatiques primaires contenant de 4 à 12 atomes de carbone sont utilisés.

7. Procédé de fabrication de polyisocyanates contenant des groupes allophanate selon l'une des revendications 3 à 5, **caractérisé en ce que** les catalyseurs d'allophanatisation utilisés sont des sels de zinc, de cobalt ou de plomb d'acides carboxyliques en C₈ à C₂₂ le cas échéant insaturés, ou bien des acétylacétonates de zinc ou de cobalt.

8. Utilisation de polyisocyanates contenant des groupes allophanate selon la revendication 1 ou la revendication 2 dans la fabrication de polyuréthanes thermoplastiques, élastomères ou réticulés.
